# EUROPEAN PATENT APPLICATION

(11) **EP 2 574 074 A2**
(43) Date of publication of application: **27.03.2013**
(21) Application number: 12184563.0
(22) Date of filing: 14.09.2012
(51) Int. Cl.: H04N 21/488, H04N 21/485

(54) **Method for displaying on-screen display image**

(30) Priority: 21.09.2011 TW 100133973
(71) Applicant: Acer Incorporated, New Taipei City 221 (TW)
(72) Inventor: CHANG, Chih-Kai, Taiwan, ROC New Taipei City 221, (TW); LEE, Jian-Wei, Taiwan, ROC New Taipei City 221, (TW)
(74) Representative: Chamberlain, Alan James

(57) **Abstract**

A method for displaying on-screen display (OSD) image, suitable for a display apparatus, is provided. In the present invention, the OSD image is enabled for showing a setting menu of the display apparatus. The setting menu includes many items. When one of the items is selected, whether the selected item is valid is determined according to a current using state of the display apparatus. If the selected item is valid, a function corresponding to the selected item is executed. If the selected item is not valid, a suggestive block is displayed on the OSD image.

## Description

### BACKGROUND OF THE INVENTION

### Field of the Invention

The present invention generally relates to a method for displaying an on-screen display (OSD), and more particularly to a method for displaying an OSD having information suggestive functions.

### Description of Related Art

An OSD is an image superimposed on the screen image, generally used in television, video or digital video disc (DVD) player so that a variety of additional information such as volume, channel or time is displayed on the screen. For example, designing the function of the OSD menu to display the various specific parameters.

In general, the user can adjust each parameter of the display apparatus through the menu displayed on the screen. And each item of the OSD menu of the display apparatus represents a parameter setting function. According to the different using states, the execution or non-execution of the parameter setting function is also different. In other words, the valid item is different according to the different using state. For instance, when the input signal is a television signal, the item of high definition multimedia interface (HDMI) cannot be used.

### SUMMARY OF THE INVENTION

Accordingly, a method for displaying on-screen display (OSD) image, capable to send a suggestive signal when a user selects an invalid item on the on-screen display image, is provided in the present invention.

The method for displaying OSD image provided in the present invention is suitable for a display apparatus. The method at least includes the following steps: enabling an OSD image for showing a setting menu of the display apparatus, wherein the setting menu comprises a plurality of items; when one of the items is selected determining whether the selected item is valid according to a current using state of the display apparatus ; executing a function corresponding to the selected item if the selected item is valid; and displaying a suggestive block on the on-screen display image if the selected item is not valid.

According to one embodiment of the present invention, each of the items belongs to at least one of a plurality of item sets. After enabling the OSD image, the at least one item set can be selected according to the current using state for marking each item of the selected item set as valid.

According to one embodiment of the present invention, in the step of selecting the at least one item set according to the current using state, the at least one item set can be selected according to a signal source of an input signal received by the display apparatus. And the signal source includes one of the high definition multimedia interface (HDMI), the video graphics array (VGA), the digital visual interface (DVI) and the television signal.

According to one embodiment of the present invention, in the step of selecting the at least one item set according to the current using state, whether the input signal includes a specific content can be further determined for marking the item corresponding to the specific content in the selected item set as valid. The specific content includes at least one of a subtitle data, a sound effect and a grading data.

According to one embodiment of the present invention, in the step of selecting the at least one item set according to the current using state, the at least one item set can also be selected according to whether a specific function of the display apparatus is started or not.

According to one embodiment of the present invention, in the step of selecting the at least one item set according to the current using state, the item set corresponding to the current using state of the display apparatus can be selected from a database.

According to one embodiment of the present invention, in the step of displaying the suggestive block on the OSD image, the suggestive block can be designed to be displayed outside the setting menu, or the suggestive block can be designed to be displayed inside the setting menu.

In light of the above, when a user selects the invalid item which is unable to use in the current using state, the method of present invention is capable to display a suggestive signal to inform the user that the item is unavailable, whereupon it is unnecessary to change the original display color or operation process.

In order to make the aforementioned and other features and advantages of the invention more comprehensible, embodiments accompanying figures are described in detail below.

### BRIEF DESCRIPTION OF THE DRAWINGS

The accompanying drawings are included to provide further understanding, and are incorporated in and constitute a part of this specification. The drawings illustrate exemplary embodiments and, together with the description, serve to explain the principles of the disclosure.

Fig. 1 is a flow chart illustrating a method for displaying OSD image according to one embodiment of the invention.

FIG. 2A to 2C respectively illustrate a schematic view of OSD image according to one embodiment of the invention.

### DESCRIPTION OF EMBODIMENTS

An on-screen display (OSD) image is generally used in a display apparatus so as to show a setting menu for a user for setting parameters. Each item of the setting menu represents a parameter setting function. And the valid item may be different when the current using state of the display apparatus is different. In order to enable the user to be aware whether the selected item is available or not, a method for displaying OSD image is provided. Through a suggestive block, the user is informed that the selected item in the current using state is invalid. In order to make the invention more comprehensible, the following embodiment is taken as an embodiment capable to be put in practice.

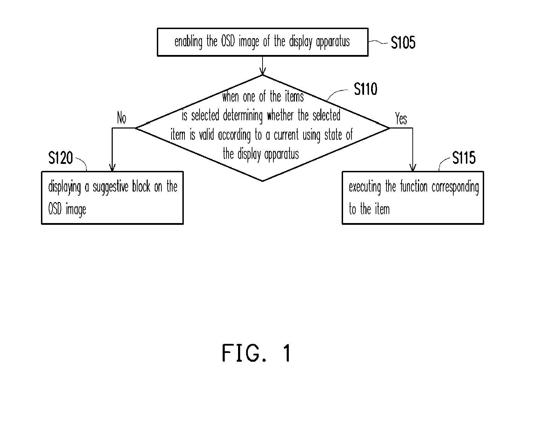

Fig. 1 is a flow chart illustrating a method for displaying OSD image according to one embodiment of the invention. Referring to FIG. 1, in the step S105, an OSD image is enabled for showing a setting menu of the display apparatus. For example, the user can enable the OSD image through the operation button of the display apparatus. Or the user can use an input apparatus (such as a remote control, a keyboard or the like) to transmit an enabled signal to the display apparatus for enabling the OSD image so as to display the setting menu. For example, when the user presses the menu button of the remote control (here, the display apparatus receives a command from the remote control), then the OSD image is displayed on the display apparatus. Thereby, the setting menu includes a plurality of items. For example, a plurality of tag pages are included in the setting menu. Each of the tag pages includes a plurality of items, and each of the items can be in one tag page or in the plurality of tag pages.

Then, in the step S110, when one of the items is selected, whether the selected item is valid is determined according to a current using state of the display apparatus. Specifically, the at least one of the item sets can be selected according to the current using state for marking each item of the selected item set as valid.

For example, the items can be classified into a plurality of item sets in the display apparatus in advance. Herein, each of the item sets corresponds to one kind of current using state or a plurality of kinds of current using states, and the one kind of current using state can also correspond to one item set or a plurality of item sets. Accordingly, when one of the items is selected, whether the selected item in the current using state is the item belonging to the item set corresponding to the current using state is determined.

Furthermore, according to a signal source of an input signal received by the display apparatus, each item of the item set corresponding to the signal source can be marked as valid. For example, the signal source includes one of the high definition multimedia interface (HDMI), the video graphics array (VGA), the digital visual interface (DVI) and the television signal. When the signal source is the HDMI, each item of the item set corresponding to the HDMI will be marked as valid.

In addition, whether the input signal includes a specific content can further be determined for marking the item corresponding to the specific content in the selected item set as valid. The specific content includes at least one of a subtitle data, a sound effect and a grading data. For example, suppose the signal source of the input signal is the HDMI and the info-frame of the input signal includes a subtitle data and a sound effect (such as Dolby sound), then the item of the subtitle data and the item of the sound effect of the item set corresponding to the HDMI are marked as valid. The item set can also be selected according to whether a specific function of the display apparatus is started or not, in order to mark each item of the item set as valid. For example, suppose the user starts the subtitle function of the digital television so as to set the priority order of the subtitle language, then the subtitle item of the setting menu is marked as valid.

Additionally, a database can further be established in the display apparatus. The item set corresponding to each using state is established in the database in advance. Accordingly, the item set corresponding to the current using state of the display apparatus can be directly obtained from the database for marking each item of the selected item set as valid.

It should be noted that each item can belong to one item set or a plurality of item sets, i.e., an item can belong to different item sets at the same time. For example, the "brightness" item can belong to the item sets respectively corresponding to three kinds of using states, the HDMI, the VGA and the television signal, at the same time. In other words, the "brightness" items are valid under the using states of the HDMI, the VGA and the television signal. Accordingly, no matter the signal source of the input signal received by the display apparatus is from the HDMI, the VGA or the television signal, the user can select the "brightness" item of the OSD image for adjusting the brightness under those using states. However, it is only for an example and is not limited thereto.

A function corresponding to the item is executed as shown in the step S115, if the selected item is valid in the step S110. On the contrary, a suggestive block is displayed on the OSD image as shown in the step S120, if the selected item is not valid. For example, the suggestive block can be designed to be displayed inside or outside the setting menu.

Regarding the case that the signal source is the VGA, the item set includes a "focus adjustment" item and a "phase adjustment" item. And these two items do not belong to the item set corresponding to the signal source being the HDMI. Moreover, when the signal source is the VGA, the "focus adjustment" item and the "phase adjustment" item will be marked as valid; when the signal source is the HDMI, the "focus adjustment" item and the "phase adjustment" item will not be marked as valid. Thus, under the condition of the signal source being the HDMI, when the "focus adjustment" item or the "phase adjustment" item is selected, the corresponding function cannot be executed. And a suggestive block can be displayed to inform the user to be aware that the selected item is not valid.

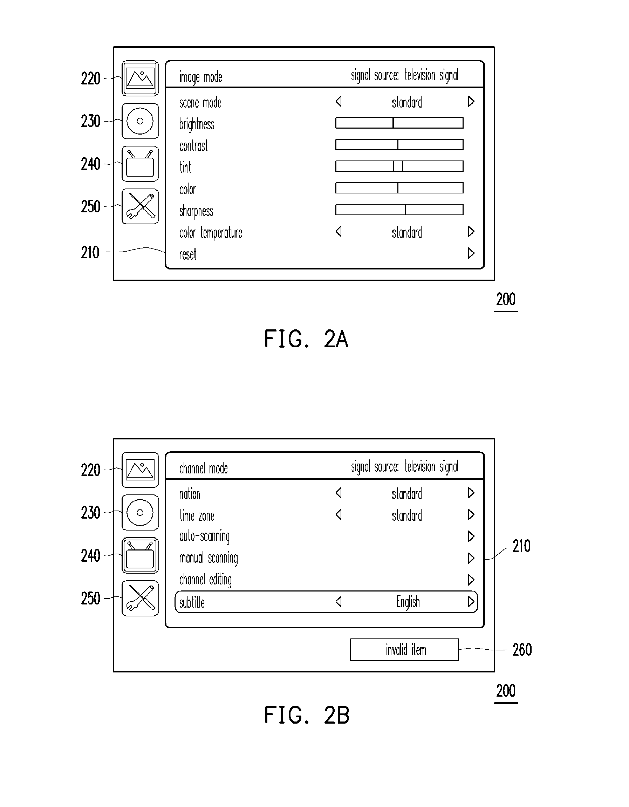

An embodiment is further described as follows to illustrate the showing effect of the OSD image. FIG. 2A to 2C respectively illustrate a schematic view of OSD image according to one embodiment of the invention. Please refer to FIG. 2A to 2C. The OSD image 200 is used for showing the setting menu 210. The setting menu 210 includes four tag pages 220, 230, 240, 250. Herein, the tag page 220 includes the item set for adjusting the image parameter. The tag page 230 includes the item set for adjusting the DVD player. The tag page 240 includes the item set for adjusting the television signal. The tag page 250 includes the item set for adjusting the parameter setting of the display apparatus.

The user can move the highlight frame of the OSD image 200 via the arrow keys of the remote control for selecting the function. For example, a tag page on the left is selected first, and then the item on the right is selected. In this embodiment, suppose the signal source of the input signal received by the display apparatus is a television signal, and suppose the item set corresponding to the television signal is each item set respectively included in the tag pages 220, 240, 250. Accordingly, each item set respectively included in the tag pages 220, 240, 250 is marked as valid.

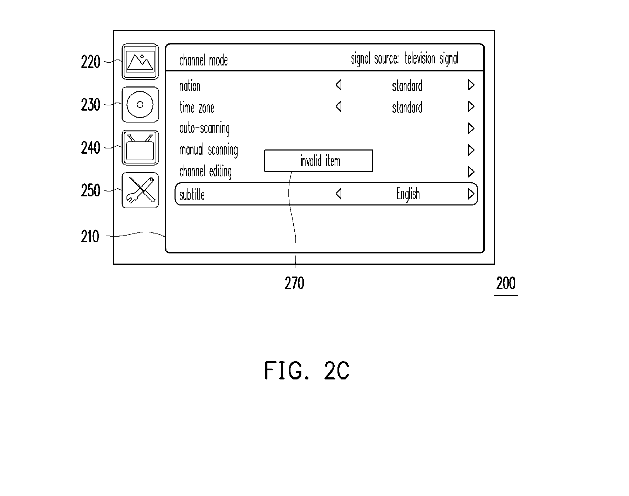

Here, FIG. 2A displays the tag page 220, both FIG. 2B and FIG. 2C display the tag page 240. In FIG. 2A, the tag page 220 is an image mode page, it is a sub-menu for setting image parameter. The tag page 220 includes 9 items and they are the items of scene mode, brightness, contrast, tint, color, sharpness, color temperature and reset. These 9 items belong to the same item set.

In FIG. 2B and FIG. 2C, the tag page 240 is a channel mode page, it is a sub-menu for adjusting the television signal. The tag page 240 includes 6 items and they are the items of nation, time zone, auto-scanning, manual scanning, channel editing and subtitle. These 6 items belong to the same item set.

Herein, if the input signal includes a subtitle data, then the subtitle item is marked as valid. Herein, if the input signal does not include a subtitle data, then the subtitle item will not be marked as valid. Accordingly, as shown in FIG. 2B, when the subtitle item is selected, the suggestive block 260 can be designed to be displayed outside the setting menu 210. In addition, as shown in FIG. 2C, the suggestive block 270 can also be designed to be displayed inside the setting menu 210. Furthermore, suppose the user starts the subtitle function of the display apparatus, then the subtitle item of the setting menu 210 is also marked as valid.

In actual application, a processing unit can be disposed in the display apparatus for executing the above mentioned steps.

In light of the above, when a user selects the invalid item which is unable to use in the current using state, the method of present invention is capable to display a suggestive signal to inform the user to be aware that the item is unavailable. Whereupon the original display color of the OSD image does not have to change. Moreover, it is unnecessary to change the operating process of the OSD image.

## Claims

1. A method for displaying on-screen display image, suitable for a display apparatus, comprising:
enabling (S105) an on-screen display image for showing a setting menu (210) of the display apparatus, wherein the setting menu (210) comprises a plurality of items;
when one of the items is selected determining (S110) whether the selected item is valid according to a current using state of the display apparatus;
executing (S115) a function corresponding to the selected item if the selected item is valid; and
displaying (S120) a suggestive block on the on-screen display image if the selected item is not valid.

2. The method according to claim 1, wherein each of the items belongs to at least one of a plurality of item sets, after enabling the on-screen display image further comprising:
selecting the at least one item set according to the current using state for marking each item of the selected item set as valid.

3. The method according to claim 2, wherein the step of selecting the at least one item set according to the current using state comprises:
selecting at least one item set according to a signal source of an input signal received by the display apparatus.

4. The method according to claim 3, wherein the signal source comprises one of a high definition multimedia interface, a video graphics array, a digital visual interface and a television signal.

5. The method according to claim 3 or 4, wherein the step of selecting the at least one item set according to the current using state further comprises:
determining whether the input signal comprises a specific content for marking the item corresponding to the specific content in the selected item set as valid.

6. The method according to claim 5, wherein the specific content comprises at least one of a subtitle data, a sound effect and a grading data.

7. The method according to any one of claims 2 to 6, wherein the step of selecting the at least one item set according to the current using state comprises:
selecting at least one item set according to whether a specific function of the display apparatus is started or not.

8. The method according to any one of claims 2 to 7, wherein the step of selecting the at least one item set according to the current using state further comprises:
selecting the item set corresponding to the current using state from a database.

9. The method according to any one of claims 1 to 8, wherein the step of displaying (S120) the suggestive block on the on-screen display image comprises:
designing the suggestive block to be displayed inside or outside the setting menu (210).
